# EUROPEAN PATENT APPLICATION

(11) **EP 3 704 951 A1**
(43) Date of publication of application: **09.09.2020**
(21) Application number: 18872122.9
(22) Date of filing: 31.10.2018
(51) Int. Cl.: A23L 7/157, A23L 17/40

(54) **DEEP FRY BATTER MIX**

(30) Priority: 31.10.2017 JP 2017209980
(71) Applicant: Nisshin Foods Inc., Tokyo 101-8441 (JP)
(72) Inventor: FUJIMURA, Ryosuke, Tokyo 103-8544 (JP)
(74) Representative: Forstmeyer, Dietmar
(86) International application number: PCT/JP2018/040434
(87) International publication number: WO 2019/088141

(57) **Abstract**

It is an object of the present invention to provide a deep fry coating mix with which it is possible to produce deep-fried food whose coating has a good and crispy texture and maintains the good texture even after a certain period of time has elapsed after production. The deep fry coating mix of the present invention contains 30 to 70% by mass of starch with a degree of swelling of 10 or less, and 30 to 70% by mass of a water-soluble dietary fiber. It is preferable that the water-soluble dietary fiber is one or more selected from the group consisting of inulin, indigestible dextrin, and β glucan. The deep fry coating mix of the present invention is particularly useful as a coating powder or for preparing a batter liquid.

## Description

### Technical Field

The present invention relates to a deep fry coating mix that is used as an ingredient of a coating when producing deep-fried food.

### Background Art

Deep-fried food is a food item obtained through heating, such as deep frying, ingredients that are various foods. Examples of deep-fried food also include *su-age* obtained by deep frying ingredients as they are without applying a coating material, but many deep-fried foods are obtained by heating ingredients whose surface is coated in a coating material, that is, the surface of the ingredients is coated in a coating made of a coating material. When ingredients whose surface is coated in a coating material are heated in oil at a high temperature, the coating brought into direct contact with the oil has a unique crispy texture and flavor, whereas ingredients coated in the coating are heated in the manner of being steamed inside the coating and have a condensed savory flavor. Deep-fried foods have an innumerable number of variations, and are very popular food items.

Coating materials that are used to produce deep-fried food are usually in the form of a powder at room temperature under atmospheric pressure, but are classified into several types according to the form they are in when applied to an ingredient surface, typical types including a coating powder type in which a coating material kept in the form of a powder is used to coat an ingredient and a batter type in which a coating material is dissolved in a liquid to form a liquid coating material (a so-called batter liquid) and is applied to an ingredient surface. Also, in the case of the batter type, after a batter liquid has been applied to an ingredient surface, a powder such as that of bread crumbs may also be applied to the batter liquid. In producing deep-fried food, there is much for improvement, such as selecting the type of coating material, and selecting the coating thickness, the application amount, the balance between the coating and ingredients, and the like.

Deep-fried food is problematic in that, as time elapses after cooking, moisture in the ingredients moves to the coating, and thus the ingredients are likely to be less juicy, and the coating is likely to be too soft and to lose its unique texture. Particularly, in recent years, a dining style has become common in which already cooked deep-fried food is commercially available, and is purchased and eaten by a consumer as is or after being heated in a microwave oven or the like. In this dining style, a relatively long period of time elapses from when deep-fried food is produced to when it is eaten, and thus a decrease in the quality of the coating due to the above-described movement of moisture is likely to be apparent. In particular, when deep-fried food is heated in a microwave oven before being eaten, microwaves from the microwave oven heat and evaporate moisture in the ingredients and are likely to cause moisture to move to the coating, and thus a decrease in the quality of the coating becomes more apparent. Furthermore, in the case in which a coating material of the above-described batter type is used, the amount of coating with respect to an ingredient is likely to be relatively large, and thus the proportion of the texture of the coating that determines the overall texture of the deep-fried food is likely to be large, and thus a decrease over time in the quality of the coating due to the above-described movement of moisture is likely to be apparent.

In order to address the above-described problems, various techniques for improving a coating material have been proposed. For example, Patent Literature 1 describes a deep fry coating material containing wheat flour, oxidized starch with a carboxyl group content of 0.1 to 1.1%, and swelling suppressed starch with a heat solubility of 3 to 40%, in a specific ratio. Patent Literature 2 describes a deep fry coating mix mainly containing a material for suppressing the collapse of swollen particles obtained by performing heat-moisture treatment on rhizome starch. Patent Literature 3 describes a deep fry batter mix containing fructan. These techniques can improve the crispy texture of the coating of deep-fried food and suppress a decrease over time in the texture, but coating materials with greater effects are in demand.

Furthermore, in order to improve a deep fry coating, water-soluble dietary fibers such as indigestible dextrin or glucomannan are conventionally added to coating materials. For example, Patent Literature 4 describes that a water-soluble dietary fiber is added to raw material bread crumbs, and it is stated that deep-fried food obtained using the bread crumbs absorbs less oil during deep frying and is excellent in removing excess oil.

### Citation List

### Patent Literatures

Patent Literature 1: JP 2011-254785A
Patent Literature 2: JP 2002-142700A
Patent Literature 3: JP 2007-61039A
Patent Literature 4: JP 2006-271329A

### Summary of Invention

It is an object of the present invention to provide a deep fry coating mix with which it is possible to produce deep-fried food whose coating has a good and crispy texture and maintains the good texture even after a certain period of time has elapsed after production.

The present invention is directed to a deep fry coating mix containing: 30 to 70% by mass of starch with a degree of swelling of 10 or less; and 30 to 70% by mass of a water-soluble dietary fiber.

Furthermore, the present invention is directed to a batter liquid containing: 100 parts by mass of the above-described deep fry coating mix according to the present invention; and 80 to 700 parts by mass of liquid.

Furthermore, the present invention is directed to a deep-fried food producing method including a step of applying a batter liquid containing 100 parts by mass of the above-described deep fry coating mix according to the present invention and 80 to 700 parts by mass of liquid to an ingredient, and performing heating.

### Description of Embodiments

A deep fry coating mix of the present invention contains starch with a degree of swelling of 10 or less (hereinafter, alternatively referred to as "swelling suppressed starch"). Typically, un-treated starch is insoluble in water, but, if it is heated together with a sufficient amount of water, water is taken in by starch molecules and causes swelling of the starch (this phenomenon is referred to as gelatinization or pregelatinization). This swelling property is suppressed in the swelling suppressed starch used in the present invention more than in ordinary starch, that is, the swelling suppressed starch is starch that is unlikely to swell. The degree of swelling is measured using the following method.

### Method for Measuring Degree of Swelling

A starch sample with a dry weight of 1.0 g is dispersed in 100 ml of purified water, and the dispersion is heated such that the liquid temperature of the dispersion is kept at 90°C for 30 minutes, and is then cooled until the liquid temperature reaches 30°C. With this cooling, the dispersion becomes a gelatinized liquid. This gelatinized liquid is separated into a gel layer (gelatinized layer) and a supernatant liquid layer through centrifugal separation at 3000 rpm for 10 minutes. The mass of the gel layer is measured, and the measured value is taken as A. Next, the gel layer whose mass has been measured is hardened through drying (105°C, constant weight), after which its mass is measured, and the measured value is taken as B. The degree of swelling of the starch sample is calculated as A/B

The swelling suppressed starch used in the present invention can be produced by subjecting raw material starch (unmodified starch) to treatment such as crosslinking treatment or heat-moisture treatment. For example, it is sufficient that some sort of treatment is performed on raw material starch, and the treatment method is adjusted such that the degree of swelling of the treated starch is ultimately 10 or less while checking the degree of swelling using the above-described method. Patent Literatures 1 and 2 may be used as a reference for the method for adjusting the degree of swelling of starch. Furthermore, as the raw material starch for swelling suppressed starch, starches typically used as a deep fry coating material can be used without any particular limitation, and examples thereof include unmodified starches such as corn starch, waxy corn starch, tapioca starch, potato starch, wheat starch, and rice starch, which may be used alone or in combination of two or more. Furthermore, those obtained by subjecting these unmodified starches to treatment other than crosslinking treatment, such as bleaching, oxidizing, etherifying, esterifying, or oil-and-fat treatment may also be used as the raw material starch for swelling suppressed starch.

The swelling suppressed starch used in the present invention is preferably crosslinked starch. Crosslinked starch is obtained by crosslinking raw material starch using an ordinarily used cross-linking agent such as trimetaphosphate, hexametaphosphate, phosphorus oxychloride, epichlorohydrin, or the like. Examples of particularly preferable crosslinked starches include distarch phosphate and hydroxypropyl distarch phosphate. That is to say, in the present invention, it is preferable to use distarch phosphate and/or hydroxypropyl distarch phosphate with a degree of swelling of 10 or less.

In the deep fry coating mix of the present invention, the content of the swelling suppressed starch is from 30 to 70% by mass, and preferably from 50 to 65% by mass, with respect to the total mass of the mix. If the content of the swelling suppressed starch is less than 30 mass, there is no particular significance in using this starch, and, specifically, the coating of deep-fried food obtained using a mix containing this starch does not have a sufficiently crispy texture, and the texture of the coating is too firm or too soft. On the other hand, if the content of the swelling suppressed starch is more than 70% by mass, the coating of the deep-fried food is unlikely to be brittle, and the texture of the coating is firm.

The deep fry coating mix of the present invention further contains a water-soluble dietary fiber, in addition to the above-described swelling suppressed starch. In order to achieve the above-described effects of the present invention, it is not sufficient to add the swelling suppressed starch to the mix, and it is necessary to also use a water-soluble dietary fiber. This fact is also clear from a comparison between later-described examples and comparative examples.

The water-soluble dietary fiber used in the present invention is a fiber that cannot be digested by human digestive enzymes and is soluble in water, and the viscosity may be either high or low. Examples of water-soluble dietary fibers with high viscosity include pectin, konjac mannan, alginic acid, guar gum, agar, and the like. Also, examples of water-soluble dietary fibers with low viscosity include inulin, indigestible dextrin, β glucan, polydextrose, guar gum decomposition products, and the like. In the present invention, these water-soluble dietary fibers may be used alone or in combination of two or more. If a water-soluble dietary fiber with high viscosity is added to a mix, the coating of deep-fried food obtained using the mix may be firm, whereas, if a water-soluble dietary fiber with low viscosity is added, such a situation is unlikely to occur. Thus, in the present invention, it is preferable to use a water-soluble dietary fiber with low viscosity, and particularly preferable to use one or more selected from the group consisting of inulin, indigestible dextrin, and β glucan.

In the deep fry coating mix of the present invention, the content of the water-soluble dietary fiber is from 30 to 70% by mass, and preferably from 35 to 50% by mass, with respect to the total mass of the mix. If the content of the water-soluble dietary fiber is less than 30 mass, there is no particular significance in using the fiber, and, specifically, the coating of deep-fried food obtained using a mix containing the fiber does not have a sufficiently crispy texture, and the texture of the coating is too firm or too soft. On the other hand, if the content of the water-soluble dietary fiber is more than 70% by mass, the coating of the deep-fried food is likely to be brittle, and the coating crumbles easily when eaten.

The deep fry coating mix of the present invention may further contain other raw materials that may be ordinarily used in production of this sort of deep fry coating mix, as necessary, in addition to the above-described swelling suppressed starch and water-soluble dietary fiber. Examples of such other raw materials include: grain flours such as wheat flour, barley flour, and rice flour; starches other than swelling suppressed starch (starch with a degree of swelling of 10 or less) such as unmodified starches of corn starch, waxy corn starch, tapioca starch, potato starch, wheat starch, rice starch, and the like, and modified starches obtained by subjecting these unmodified starches to one or more types of treatment such as oil-and-fat, pregelatinizing, etherifying, esterifying, crosslinking, or oxidizing treatment; seasonings such as sugars, salt, and powdered soy sauce, fats and oils, powder emulsifiers, thickeners, proteins, leavening agents, insoluble dietary fiber, and the like, which may be used alone or in combination of two or more. In the deep fry coating mix of the present invention, the content of the other raw materials is preferably 40% by mass or less, more preferably 30% by mass or less, and even more preferably 20% by mass or less, with respect to the total mass of the mix.

In deep-fried food obtained using the deep fry coating mix of the present invention, the swelling suppressed starch (starch with a degree of swelling of 10 or less) coats the ingredient well and forms the coating, and functions as the base of the formed coating. Meanwhile, the water-soluble dietary fiber does not function as the base of the coating, but can provide appropriate collapsability, and thus, together with an action of the swelling suppressed starch, they can form a crispy coating that is appropriately brittle. Furthermore, since the swelling suppressed starch and the water-soluble dietary fiber form a coating in a matrix form, even after a certain period of time has elapsed after production of deep-fried food or even when the deep-fried food is heated again in a microwave oven or the like, the coating can maintain a good texture similar to that immediately after production.

If the swelling suppressed starch and the water-soluble dietary fiber are used together in this manner, it is possible to form a coating with a good and crispy texture, and thus raw materials that may significantly affect formation of the coating, for example, wheat flours such as weak flour, medium flour, strong flour, durum wheat flour, and the like are essentially unnecessary for the deep fry coating mix of the present invention. Wheat flour acts strongly in forming the base of a coating, and thus, if the amount of wheat flour contained in the mix is large, the actions and effects obtained by combining the above-described swelling suppressed starch and water-soluble dietary fiber may be inhibited. From this point of view, the content of wheat flour in the deep fry coating mix of the present invention is preferably 20% by mass or less, and more preferably 0% by mass (i.e., wheat flour is not contained in the mix), with respect to the total mass of the mix.

The deep fry coating mix of the present invention is in the form of a powder at room temperature under atmospheric pressure, and can be used as a coating powder or for preparing a batter liquid. That is to say, when producing deep-fried food using the deep fry coating mix of the present invention, the mix may be used as a coating powder, for example, such that the mix kept in the form of a powder is applied to an ingredient surface, or may be used for preparing a batter liquid, for example, such that the mix is mixed with a liquid. As described above, in the case in which a coating material of the above-described batter type is used, the amount of coating with respect to an ingredient is likely to be relatively large, the proportion of the texture of the coating that determines the overall texture of the deep-fried food is likely to be relatively large, and the quality of the coating is likely to determine the overall quality of the deep-fried food. With the deep fry coating mix of the present invention, it is possible to obtain high quality deep-fried food even when used as a batter-type coating material, and to achieve greater effects when used as a batter-type coating material.

When the deep fry coating mix of the present invention is used for preparing a batter liquid, the liquid that is mixed with the mix is typically water, but examples of liquids other than water include milk, beaten egg, broth, soup, and the like, which may be used alone or in combination of two or more. Furthermore, when preparing a batter liquid using the deep fry coating mix of the present invention, there is no limitation on the amount of liquid used, and the amount may be adjusted as appropriate according to the type of ingredients that are used to produce deep-fried food, but the amount is preferably larger than the amount of liquid that is typically used to prepare this sort of batter liquid. Specifically, the amount is preferably from 80 to 700 parts by mass, more preferably from 200 to 500 parts by mass, and even more preferably from 300 to 450 parts by mass, with respect to 100 parts by mass of the deep fry coating mix. The present invention encompasses a batter liquid containing 100 parts by mass of the above-described deep fry coating mix of the present invention and 80 to 700 parts by mass of liquid, and a deep-fried food producing method including a step of applying the batter liquid to an ingredient and performing heating.

In the deep-fried food producing method using the deep fry coating mix of the present invention, it is possible to produce deep-fried food using the mix as a coating powder or for preparing a batter liquid, by applying the mix to at least part of the ingredient surface, and further applying bread crumbs, breader, or the like as necessary to the mix, and deep frying the resultant. The present invention can be applied to production of various deep-fried foods, preferably to *tempura,* fritters, fried foods, and *kara-age,* inter alia, to *tempura* and fritters. There is no particular limitation on the ingredients of deep-fried foods, and examples thereof include various foods, for example, meats such as chicken, pork, beef, mutton, and chevon, seafoods such as squid, shrimp, and horse mackerel, and vegetables. The ingredients may be seasoned or coated in a dusting powder as necessary, before the deep fry coating mix of the present invention or a batter liquid prepared from the mix is applied thereto.

Note that the deep fry coating mix of the present invention is not suitable to be used as bread crumbs. That is to say, bread crumbs obtained by mixing the deep fry coating mix of the present invention and a liquid such as water, kneading the mixture as necessary to prepare bread dough, baking the bread dough, and breaking up the baked bread cannot achieve the above-described effects of the present invention, even when used together with a coating material other than the mix.

### Examples

Hereinafter, the present invention will be described in more detail by way of examples, but the invention is not limited to the following examples.

### Treatment for Decreasing Degree of Swelling of Starch

Tapioca starch used as raw material starch (unmodified starch) was subjected to crosslinking treatment to produce a plurality of starches with different degrees of swelling. Specifically, first, 100 g of tapioca starch was respectively placed into a plurality of beakers, 120 g of 10% sodium sulfate solution was added to the content of each beaker, and the mixture was stirred, so that starch in the content was dispersed to form a slurry. Next, the pH of the slurry was adjusted to 11 by adding 3% aqueous sodium hydroxide while stirring the slurry in each beaker. Then, 0.01 to 0.3 g of sodium trimetaphosphate was added to the slurry in each beaker and dissolved therein. The content in each beaker was allowed to react at 40°C while being stirred, and the reaction was ended through neutralization using hydrochloric acid after 12 hours. After the reaction was ended, the content in each beaker was filtered to obtain starch, which was washed with water twice and dried to produce starch whose degree of swelling had been decreased. In this manner, five types of starches with different degrees of swelling were produced. Their degrees of swelling were 3.3, 5.9, 7.2, 9.9, and 11.6. Note that the degree of swelling of tapioca starch that was raw material starch was 40.

### Examples 1 to 14 and Comparative Examples 1 to 7

Deep fry coating mixes were produced by mixing raw materials in proportions shown in Tables 1 to 3 below. The raw materials used were as follows.
- Inulin: product name "Fuji FF" (manufactured by Fuji Nihon Seito Corporation)
- Indigestible dextrin: product name "Fiber Sol 2" (manufactured by Matsutani Chemical Industry Co., Ltd.)
- β Glucan: manufactured by Oriental Yeast Co., ltd.
- Pectin: product name "H&F pectin classic CM201" (manufactured by DSP Gokyo Food & Chemical Co., Ltd.)
- Alginic acid: product name "Kimica Acid G" (manufactured by Kimica Corporation)
- Wheat flour: weak flour (manufactured by Nisshin Foods Inc.)
- Unmodified starch: potato starch

### Test Examples

Batter liquids for *tempura* were produced by mixing 300 parts by mass of water with respect to 100 parts by mass of the deep fry coating mix and lightly stirring the mixture. The shells were peeled from shrimp with tails (20 g/piece) and moisture was removed, and, after a dusting powder was applied thereto, each shrimp was entirely coated in the batter liquid. The resultant was placed in a vat of oil at 170°C and deep-fried for two and a half minutes, so that shrimp *tempura,* which is a type of deep-fried food, was produced. The freshly deep-fried shrimp *tempura* was consumed by ten professional panelists, and the texture at that time was evaluated according to the following evaluation criteria. Also, shrimp *tempura* kept at room temperature for four hours after production and heated again for 10 seconds in a microwave oven at 600W was consumed by ten professional panelists, and the texture at that time was evaluated according to the following evaluation criteria. Table 1 to 3 below show the evaluation results as average points by the ten panelists.

### Evaluation Criteria of Texture of Tempura

5 Points: Very good; Coating is not too firm and is not sticky, and has a very brittle and crispy texture.
4 Points: Good; Coating is not too firm and is not sticky, and has a brittle and crispy texture.
3 Points: Coating is not quite firm or sticky, but is slightly insufficient in terms of a brittle and crispy texture.
2 Points: Poor; Coating is firm or sticky, and is poor in terms of a brittle and crispy texture.
1 Point: Very poor; Coating is too firm or very sticky, and has no brittle and crispy texture.

**Table 1**

| | | | Example | | | | Comparative Example | | | | |
|---|---|---|---|---|---|---|---|---|---|---|---|
| | | | 1 | 2 | 3 | 4 | 1 | 2 | 3 | 4 | 5 |
| Mix composition (mass%) | Starch | Degree of swelling 3.3 | 60 | - | - | - | - | - | - | - | - |
| | | Degree of swelling 5.9 | - | 60 | - | - | - | - | - | - | - |
| | | Degree of swelling 7.2 | - | - | 60 | - | - | 60 | 60 | 100 | - |
| | | Degree of swelling 9.9 | - | - | - | 60 | - | - | - | - | - |
| | | Degree of swelling 11.6 | - | - | - | - | 60 | - | - | - | - |
| | Inulin (water-soluble dietary fiber) | | 40 | 40 | 40 | 40 | 40 | - | - | - | - |
| | Wheat flour | | - | - | - | - | - | 40 | - | - | 100 |
| | Unmodified starch | | - | - | - | - | - | - | 40 | - | - |
| | Total | | 100 | 100 | 100 | 100 | 100 | 100 | 100 | 100 | 100 |
| Texture of *tempura* | Immediately after production | | 4.1 | 4.3 | 4.5 | 4.3 | 3.0 | 3.4 | 2.8 | 2.4 | 3.8 |
| | Heated again 4 hours after production | | 3.5 | 4.0 | 4.1 | 4.0 | 1.8 | 2.3 | 2.2 | 1.5 | 1.9 |

As shown in Table 1, the mix of Comparative Example 1 had a degree of swelling of starch contained of more than 10, and thus it was evaluated lower than the mixes of the examples with a degree of swelling of 10 or less. Furthermore, the mixes of Comparative Examples 2 to 5 did not contain a water-soluble dietary fiber, and thus they were evaluated lower than the mixes of the examples containing a water-soluble dietary fiber.

**Table 2**

| | | Example | | | | | Comparative Example | |
|---|---|---|---|---|---|---|---|---|
| | | 5 | 6 | 3 | 7 | 8 | 6 | 7 |
| Mix composition (mass%) | Starch (Degree of swelling 7.2) | 30 | 50 | 60 | 65 | 70 | 20 | 80 |
| | Inulin (water-soluble dietary fiber) | 70 | 50 | 40 | 35 | 30 | 80 | 20 |
| | Total | 100 | 100 | 100 | 100 | 100 | 100 | 100 |
| Texture of *tempura* | Immediately after production | 4.0 | 4.3 | 4.5 | 4.4 | 4.0 | 3.5 | 3.4 |
| | Heated again 4 hours after production | 3.5 | 3.9 | 4.1 | 4.0 | 3.6 | 2.5 | 2.6 |

As is clear from a comparison between the examples and the comparative examples in Table 2, it is preferable that the contents of starch with a degree of swelling of 10 or less and water-soluble dietary fiber in the mix are each from 30 to 70% by mass, which is in the range of the examples.

**Table 3**

| | | | Example | | | | | | |
|---|---|---|---|---|---|---|---|---|---|
| | | | 3 | 9 | 10 | 11 | 12 | 13 | 14 |
| Mix composition (mass%) | Starch (Degree of swelling 7.2) | | 60 | 60 | 60 | 60 | 60 | 60 | 60 |
| | Water-soluble dietary fiber | Inulin | 40 | - | - | 20 | - | - | - |
| | | Indigestible dextrin | - | 40 | - | 20 | 20 | - | - |
| | | β Glucan | - | - | 40 | - | - | - | - |
| | | Pectin | - | - | - | - | 20 | 40 | - |
| | | Alginic acid | - | - | - | - | - | - | 40 |
| | Total | | 100 | 100 | 100 | 100 | 100 | 100 | 100 |
| Texture of *tempura* | Immediately after production | | 4.5 | 4.6 | 4.5 | 4.6 | 4.3 | 4.0 | 3.9 |
| | Heated again 4 hours after production | | 4.1 | 4.2 | 4.0 | 3.2 | 3.9 | 3.4 | 3.3 |

It is seen from Table 3 in which Example 3, 9, and 10 are particularly highly evaluated that, as the water-soluble dietary fiber, it is preferable to use inulin, indigestible dextrin, or β glucan alone, and more preferable to use inulin or indigestible dextrin.

### Industrial Applicability

According to the present invention, it is possible to produce deep-fried food whose coating has a good texture that is very crispy and is not sticky, and maintains the good texture even after a certain period of time has elapsed after production or even when the deep-fried food is heated again in a microwave oven or the like.

## Claims

1. A deep fry coating mix comprising: 30 to 70% by mass of starch with a degree of swelling of 10 or less; and 30 to 70% by mass of a water-soluble dietary fiber.

2. The deep fry coating mix as set forth in claim 1, wherein the water-soluble dietary fiber is one or more selected from the group consisting of inulin, indigestible dextrin, and β glucan.

3. The deep fry coating mix as set forth in claim 1 or 2, wherein the mix is used as a coating powder or for preparing a batter liquid.

4. A batter liquid comprising: 100 parts by mass of the deep fry coating mix as set forth in any one of claims 1 to 3; and 80 to 700 parts by mass of liquid.

5. A deep-fried food producing method comprising a step of applying a batter liquid containing 100 parts by mass of the deep fry coating mix as set forth in any one of claims 1 to 3 and 80 to 700 parts by mass of liquid to an ingredient, and performing heating.
